(19) Europäisches Patentamt / European Patent Office / Office européen des brevets

(11) **EP 3 935 362 B1**

(12) **EUROPEAN PATENT SPECIFICATION**

(45) Date of publication and mention of the grant of the patent:
**24.06.2026 Bulletin 2026/26**

(21) Application number: **20715597.9**

(22) Date of filing: **02.03.2020**

(51) International Patent Classification (IPC):
*G01L 9/00* (2006.01)    *G01L 13/02* (2006.01)
*G01L 7/08* (2006.01)    *G01L 11/00* (2006.01)
*G01L 13/06* (2006.01)    *G01L 19/02* (2006.01)

(52) Cooperative Patent Classification (CPC):
**G01L 9/007; G01L 13/06; G01L 19/02**

(86) International application number:
**PCT/US2020/020660**

(87) International publication number:
**WO 2020/180794 (10.09.2020 Gazette 2020/37)**

(54) **PRESSURE SENSOR**

DRUCKSENSOR

CAPTEUR DE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2019  CN 201910159416**
**20.02.2020  CN 202010104461**

(43) Date of publication of application:
**12.01.2022  Bulletin 2022/02**

(73) Proprietor: **Illinois Tool Works Inc.**
**Glenview, IL 60025 (US)**

(72) Inventors:
• **XIE, Longqiang**
**Glenview, IL 60025 (US)**
• **LAI, Yong**
**Glenview, IL 60025 (US)**

(74) Representative: **HGF**
**HGF Limited**
**4th Floor, 1 City Square**
**Leeds LS1 2ES (GB)**

(56) References cited:
**EP-A1- 3 336 502      WO-A1-2015/153194**
**KR-A- 20180 079 196    US-B2- 9 267 859**

## Description

### FIELD OF THE INVENTION

The present invention relates to a sensor and, more particularly, to a pressure sensor used for detecting the operating parameters of domestic electrical appliances.

### BACKGROUND

For some domestic electrical appliances such as washing machines, some operating parameters must be detected during their use to ensure their proper operations, e.g. the distribution uniformity of laundry to be done in the washing machine drum, the pressure of water supply and/or water level, etc.

Pressure sensors are used in prior art for the detection of water pressure and/or water level. A pressure sensor usually includes a rigid housing that has a deformable membrane sensitive to air pressure. When the pressure changes, deformation of the membrane takes place. A pressure sensor also includes a magnetic core, an operating spring and a coil, with the magnetic core moving reciprocatively in coordination with the membrane under the action of the operating spring in response to the membrane deformation. The coil is mounted to the housing such that the inductance of the coil is varied in response to movements of the magnetic core. The coil and capacitors form an oscillator circuit in response to the change in inductance of the coil, and the oscillator circuit is capable of producing oscillating electronic signals with variable frequency. Therefore, changes in water levels in the cylinders or drums of domestic electrical appliances (i.e. changes in pressures) during their use would lead to changes in oscillation frequency of the oscillating electronic signals.

US9267859B2 relates to a mechanical fluid sensor. EP3336502A1 relates to a differential pressure sensor. KR20180079196A relates to a pressure sensor. WO2015153194A1 relates to a pressure sensor and a blower using the same.

### SUMMARY OF THE INVENTION

Pressure sensors have relatively more stringent requirements for precision, and existing production process can hardly meet these precision requirements. It has been discovered by the applicant after long-term experiments and observations that for the same pressure sensor, the linearity of the oscillation frequency generated by the oscillator circuit in response to pressure change is poor during assembly and use, or the change in oscillation frequency is unstable; and for different pressure sensors, the linearity of the oscillation frequency generated by the oscillator circuit in response to pressure change is inconsistent.

It has been discovered by the applicant after long-term experiments and observations that the aforementioned problems are due to the unstable positional relativity between the magnetic core, the operating spring and the coil. Specifically, during reciprocation of the magnetic core in response to membrane deformation, the locus of the magnetic core does not completely correspond to pressure changes. In a prior art pressure sensor, the operating spring is usually metallic and there inevitably exist gaps of different widths between the ends of the operating spring and the plastic material, thus probably making the operating spring to sway or tilt and deviate with different magnitudes from its predetermined position. During reciprocation of the magnetic core in response to membrane deformation, mild internal vibration may be generated between the operating spring and the magnetic core which affects the locus of the magnetic core. Therefore, prior art pressure sensors can hardly meet the requirements for linearity of oscillation frequency and precision.

One of the objects of the present invention is to resolve the aforementioned problems by providing an improved pressure sensor.

In a first aspect, the present invention provides a pressure sensor according to claim 1.

According to the first aspect, the diaphragm comprises a support and a thin film surrounding the support, the thin film being extended from the edge of the support; wherein the magnetic core is propped on the support.

According to the first aspect, a bearing plate is provided between the magnetic core and the support, the magnetic core being propped on the bearing plate.

According to the first aspect, the pressure sensor further comprises: compensating elastic components sandwiched between the lower housing part and the diaphragm.

According to the first aspect, the compensating elastic components include an elastic rod provided below the support of the diaphragm, the elastic rod being extended from the support and in contact with the bottom of the lower housing part, the elastic rod being capable of axial motion along the magnetic core.

According to the claimed invention, the pressure sensor further comprises: an adjustment bolt provided at the top of the upper housing part, wherein the top end of the operating spring is supported against the adjustment bolt, the adjustment bolt is configured to adjust the magnitude of preset force applied by the operating spring on the magnetic core; and wherein the adhesive layers are configured to have the operating spring bonded to the magnetic core and to the adjustment bolt.

According to the first aspect, the adhesive layers include a first adhesive layer provided between the top end of the operating spring and the adjustment bolt, the first adhesive layer being configured to have the top end of the operating spring bonded to the adjustment bolt.

According to the first aspect, the adhesive layers include a second adhesive layer provided between the bottom end of the operating spring and the magnetic core, the second adhesive layer being configured to have the bottom end of the operating spring bonded to the magnetic core.

According to the first aspect, the operating spring and the magnetic core are provided coaxially with each other.

According to the first aspect, the upper housing part is connected to the upper portion of the lower housing part, wherein a third adhesive layer is provided between the upper housing part and the lower housing part.

According to the first aspect, the pressure sensor further comprises: capacitors; and a coil mounted to the upper housing part, the coil working in coordination with the magnetic core to form a variable inductance sensor; wherein the capacitors and the variable inductance sensor form a variable frequency oscillator.

According to the first aspect, the pressure sensor further comprises: at least one printed circuit board whose rear portion is connected to the upper housing part, the end of the coil is connected to the at least one printed circuit board; the lower housing part is provided with support rods configured to support the front portion of the at least one printed circuit board; wherein a fourth adhesive layer is provided between the support rod and the at least one printed circuit board.

According to the first aspect, the coil comprises at least one coil layer; the upper housing part comprises a cylindrical end, each of the coil layers comprises a plurality of wire turns, each of the plurality of wire turns (655) is wound circumferentially around the cylindrical end; wherein a fifth adhesive layer extending axially along the cylindrical end is provided between at least two of the coil layers adjacent to each other, or between at least one of the coil layers and the cylindrical end.

According to the first aspect, the fifth adhesive layer is provided between the outermost of the coil layers and the coil layer on the inner side thereof, and configured to have the outermost of the coil layers bonded to the coil layer on the inner side thereof.

According to the first aspect, the operating spring comprises a plurality of helical coil turns, each of the top end and the bottom end of the operating spring comprises at least two closely appressed helical coil turns, the top end and/or the bottom end of the operating spring have closed ends.

According to the first aspect, the top end and/or the bottom end of the operating spring have closed and ground ends.

In comparison with prior art pressure sensors, the pressure sensor of the present invention enables the operating spring and the magnetic core to move integrally with each other, thereby improving the precision of the pressure sensor.

BRIEF DESCRIPTION OF THE DRAWINGS

Figure 1 is an isometric schematic of a pressure sensor of an embodiment of the present invention.
Figure 2A is an exploded view of the pressure sensor shown in Figure 1.
Figure 2B is a longitudinal sectional view of the pressure sensor shown in Figure 1.
Figure 3 is a longitudinal sectional view of a pressure sensor of another embodiment of the present invention.
Figure 4 is a longitudinal sectional view of a pressure sensor of yet another embodiment of the present invention.
Figure 5A is an isometric schematic illustrating the pressure sensor shown in Figure 1 with its cover removed.
Figure 5B is a sectional view taken along the line A-A shown in Figure 5A.
Figure 6A and Figure 6B illustrate the structure of a coil.
Figure 7A and Figure 7B illustrate the structure of an operating spring.
Figure 8A and Figure 8B are schematic circuit diagrams depicting the oscillator circuits of two embodiments of the present invention.
Figure 9 is a graph illustrating the statistical results in terms of capabilities of a prior art pressure sensor and a pressure sensor of the present invention during production processes.

DETAILED DESCRIPTION

The present invention is described in further detail below with reference to preferred embodiments thereof in connection with the accompanying drawings. It should be understood that while terms used for indicating directions such as "in front of", "behind", "above", "below", "left", "right", "top" and "bottom" describe the structural components and elements of various embodiments of the present invention, their use is merely intended for illustrative purposes and determined based on orientation of the embodiments shown in the drawings. As the embodiments disclosed by the present invention can be in different directions, those terms used for indicating directions are meant to be illustrative rather than restrictive. Where possible, same or similar markers used in the present invention refer to the same or similar components.

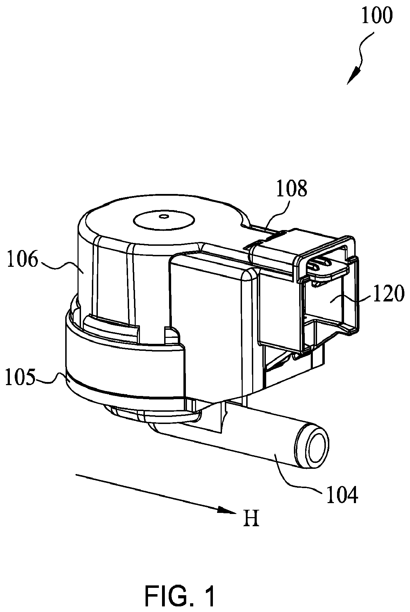

Figure 1 is an isometric schematic of a pressure sensor 100 of an embodiment of the present invention, which illustrates the structure of the pressure sensor. As shown in Figure 1, the pressure sensor 100 comprises a housing 105 and a cover 106 disposed on the housing 105. The housing 105 at the bottom of the pressure sensor 100 is provided with a pipe joint 104 disposed thereon, the pipe joint 104 extends substantially in the longitudinal direction of the length H of the pressure sensor 100 and is configured to have the internal chamber of the housing 105 at least partially communicated with the fluid whose level is to be detected. The cover 106 is provided with an extended portion 108 on one side along the length H of the pressure sensor 100, and the end of the extended portion 108 is provided with a signal interface 120 configured to connect signals generated by the pressure sensor 100 to the control system of a washing machine.

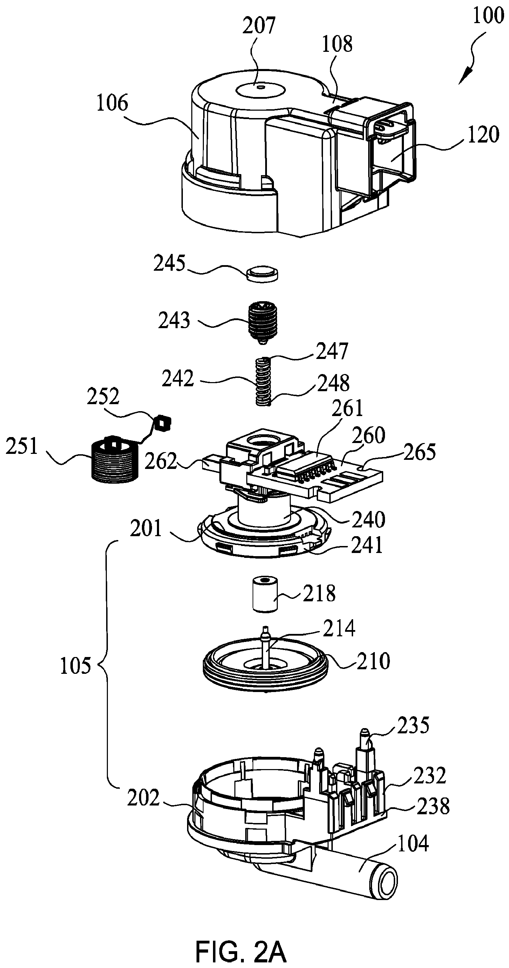

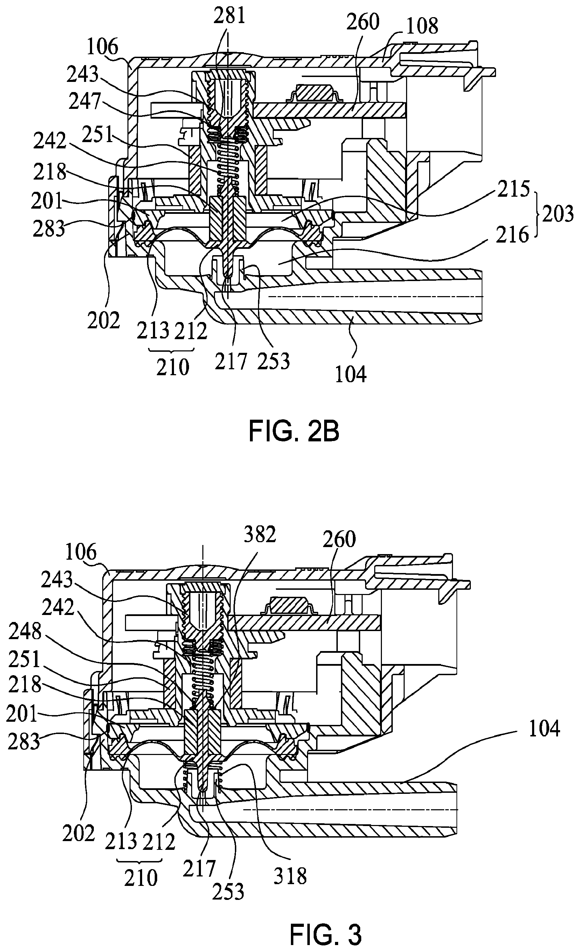

Figure 2A and Figure 2B illustrate the structure of the pressure sensor 100, where Figure 2A is an exploded view of the pressure sensor 100 shown in Figure 1, and Figure 2 is a longitudinal sectional view of the pressure sensor 100 shown in Figure 1. As shown in Figure 2A and Figure 2B, the pressure sensor 100 comprises a housing 105 and a cover 106, the housing 105 comprising an upper housing part 201 and a lower housing part 202. The cover 106 is connected to the outer side of the sidewall of the lower housing part 202, the upper housing part 201 is connected to the inner side of the sidewall of the lower housing part 202, and a chamber 203 is formed between the upper housing part 201 and the lower housing part 202. The cover 106 comprises a main body 207 and an extended portion 108, wherein the main body 207 is approximately cylindrical. The lower housing part 202 is also approximately cylindrical and one side thereof is provided with a mounting platform 238. The cylindrical portion of the lower housing part 202 is partially connected to the main body 207 of the cover 106, e.g. by means of a snap-lock connection. The mounting platform 238 of the lower housing part 202 is provided with a snap-lock mechanism 232 by means of which the mounting platform 238 of the lower housing part 202 can be connected with the extended portion 108 of the cover 106.

The upper housing part 201 is cup-shaped and comprises a base 241 and a cylindrical end 240. The base 241 of the upper housing part 201 is connected to the inner side of the sidewall of the lower housing part 202. In an exemplary embodiment, the base 241 of the upper housing part 201 is connected to the inner side of the sidewall of the lower housing part 202 by means of adhesive bonding (e.g. glue dispensing) so that an adhesive layer 283 is formed between the base 241 of the upper housing part 201 and the lower housing part 202. The adhesive layer 283 enables the upper housing part 201 and the lower housing part 202 to be connected more firmly without relative motion in the vertical direction, thereby reducing the requirements for processing precision of the connection between the upper housing part 201 and the lower housing part 202.

As shown in Figure 2A and Figure 2B, the interior of the pressure sensor 100 comprises a pressure sensing portion, an inductance sensing portion and a signal output portion. The pressure sensing portion is configured to detect the pressure of the fluid to be measured, the inductance sensing portion is configured to convert the detected pressure to a certain amount of inductance, and signal output portion is configured to convert the inductance to an electronic signal to be outputted to the control system of a domestic electrical appliance.

The pressure sensing portion of the pressure sensor 100 comprises a diaphragm 210 provided in the chamber 203 between the upper housing part 201 and the lower housing part 202, the diaphragm 210 being capable of hermetically dividing the chamber 203 into an upper chamber 215 and a lower chamber 216. The diaphragm 210 undergoes deformation in response to pressure changes in the lower chamber 216. Deformation of the diaphragm 210 can reflect the magnitude of pressure of the liquid to be measured. Specifically, the diaphragm 210 comprises a support 212 and a thin film 213 surrounding the support 212, the thin film 213 being extended from the edge of the support 212. The edge of the thin film whose thickness is larger than that of the thin film is sandwiched between the upper housing part 201 and the lower housing part 202 so as to hermetically divide the upper chamber 215 and the lower chamber 216. The thin film 213 is arched upwards to facilitate deformation of the diaphragm 210. The upper chamber 215 is communicated with the atmosphere such that the pressure in the upper chamber 215 is equal to atmospheric pressure. In an exemplary embodiment, the upper housing part 201 may be provided with a plurality of through holes for the upper chamber 215 to be communicated with the atmosphere. The lower chamber 216 is connected to the cylinder of a domestic electrical appliance (for example) through the pipe joint 104 disposed at the bottom of the lower housing part 202 to facilitate the measurement of liquid level (or water level) in the cylinder. This being the case, the pressure in the lower chamber 216 is dependent on the pressure of the liquid to be measured, i.e. the liquid level (or water level) in the cylinder. Therefore, during the use of a domestic electrical appliance, as the liquid level (or water level) changes, pressure difference between the upper chamber 215 and the lower chamber 216 also changes. The diaphragm 210 undergoes deformation due to the changing pressure difference between the upper chamber 215 and the lower chamber 216. The pressure of the fluid to be measured can be obtained by detecting the magnitude of deformation of the diaphragm 210.

The inductance sensing portion of the pressure sensor 100 comprises a magnetic core 218 and a coil 251, wherein the magnetic core 218 is propped on the support 212 of the diaphragm 210, and the coil 251 is wound circumferentially around the cylindrical end 240. Along with the deformation of diaphragm 210, the magnetic core 218 moves and the amount of movement is the magnitude of deformation of the diaphragm 210. The magnetic core 218 is made of ferromagnetic material and can get in and out of the cylindrical end 240 of the upper housing part 201 so as to change the inductance of the coil 251 wound circumferentially around the cylindrical end 240, thereby forming a variable inductor. In an exemplary embodiment, the magnetic core 218 can be made of soft magnetic material.

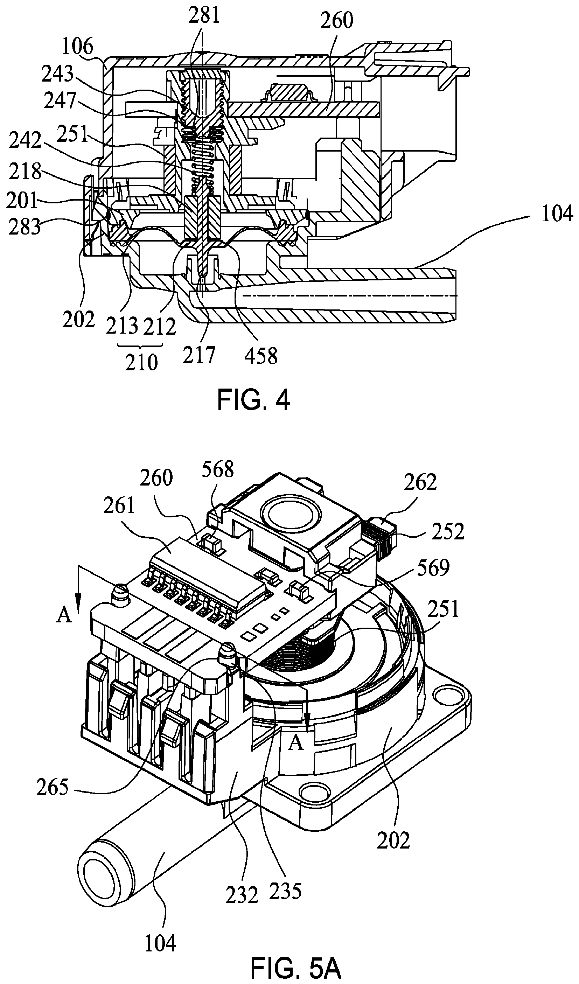

Specifically, the magnetic core 218 can be in contact with or not in contact with the support 212 and linked to the support 212, e.g. propped by the support 212. In the embodiment shown in Figure 2B, the magnetic core 218 is directly propped on the support 212. In other embodiments, the magnetic core 218 can be propped on a bearing plate 458 on the support 212 (see Figure 4). In the embodiment shown in Figure 2A and Figure 2B, the diaphragm 210 further comprises a mounting rod 214 disposed at the top of the support 212, the mounting rod 214 extending vertically upwards from the top of the support 212. The magnetic core 218 is cylindrical and in which the mounting rod 214 is sheathed. In an exemplary embodiment, the shape and dimensions of the mounting rod 214 are set to match with the magnetic core 218, and the mounting rod 214 is coaxial with the magnetic core 218 so that the magnetic core 218 is stably propped by the support 212 without motion relative to each other.

The coil 251 is wound circumferentially around the cylindrical end 240 of the upper housing part 201 and disposed coaxially with the magnetic core 218 (i.e. the axis of the coil 251 and the axis of the magnetic core 218 coincide). When the magnetic core 218 moves relative to the housing 105 along with the deformation of the diaphragm 210, the magnetic core 218 can get in and out of the space defined by the coil 251 so as to change the inductance of the coil 251, thereby converting the detected pressure of the fluid to be measured to a certain amount of inductance.

The inductance sensing portion of the pressure sensor 100 further comprises an operating spring 242, an adjustment bolt 243 and compensating elastic components disposed opposite to the operating spring 242. In the embodiment shown in Figure 2A and Figure 2B, the compensating elastic components include an elastic rod 217 while in other embodiments the compensating elastic components may further include a compensating spring 318 (see Figure 3). The operating spring 242 is sandwiched between the upper housing part 201 and the magnetic core 218, and the elastic rod 217 is sandwiched between the lower housing part 202 and the diaphragm 210. Specifically, the operating spring 242 comprises a top end 247 and a bottom end 248. In an embodiment not covered by the claimed invention, the top end 247 of the operating spring 242 is connected abuttingly with the adjustment bolt 243 inserted from the top of the cylindrical end 240, while the bottom end 248 of the operating spring 242 is connected abuttingly with the magnetic core 218. When the operating spring 242 is compressed, the bottom end 248 thereof can apply a downward preset force on the magnetic core 218 to push the magnetic core 218. By adjusting the depth of insertion of the adjustment bolt 243 into the cylindrical end 240, the tightness of the operating spring 242 at its initial state can be adjusted and the magnitude of preset force applied by the operating spring 242 to the magnetic core 218 can thereby be adjusted. The compensating elastic components are configured such that their elastic forces or support forces can offset the gravitational forces generated by the magnetic core 218, the diaphragm 210 and other components and the preset force applied by the operating spring 242, in order that the magnetic core 218 can move linearly as pressure changes even when pressure change begins and signals with linearly changing frequency can be generated by the circuit. The top of the adjustment bolt 243 is provided with a bolt fixing adhesive 245 configured to fix the position of the adjustment bolt 243 to thereby fix the top end 247 of the operating spring 242.

According to an embodiment of the present invention, the compensating elastic component is the elastic rod 217 with flexibility or elasticity and the elastic rod 217 is extended downwards from the bottom of the support 212. The lower end of the elastic rod 217 can have contact with the bottom of the lower housing part 202. In this way, when the pressure sensor 100 is vertically placed during its use, the elastic rod 217 with flexibility or elasticity can generate compensating effects on the gravitational forces generated by the magnetic core 218, the diaphragm 210 and other components and on the preset force applied by the operating spring 242. The elastic rod 217 can be made integrally with the support 212. In addition, the elastic rod 217 is concentrically aligned with the mounting rod 214 so that the elastic rod 217 and the magnetic core 218 are coaxial with each other. The compensating elastic components can further include a compensating spring 318 which will be described in detail with reference to Figure 3. The bottom of the lower housing part 202 is provided with a protruding component 253, and the protruding component 253 is a hollow tubular structure capable of partially accommodating the elastic rod 217 and configured to support the bottom of the elastic rod 217. The height of the protruding component 253 is set to be within the itinerary of upward and downward motions of the elastic rod 217, and the elastic rod 217 is always partially accommodated in the protruding component 253 such that it will not come off in order that the elastic rod 217 can move along its desired locus. The position of the elastic rod 217 can be restricted by providing the protruding component 253.

In the embodiment shown in Figure 2B, the top end 247 of the operating spring 242 and the adjustment bolt 243 are connected by means of adhesive bonding (e.g. glue dispensing) so that an adhesive layer 281 is formed between the top end 247 of the operating spring 242 and the adjustment bolt 243. This arrangement ensures that the relative position of the operating spring 242 between the adjustment bolt 243 and the magnetic core 218 remains unchanged, so that the adjustment bolt 243 is coaxial with the magnetic core 218 and the adjustment bolt 243 and the operating spring 242 does not move nonaxially. Hence, when the positions of the adjustment bolt 243 and the elastic rod 217 are fixed, the magnitude of preset force of the operating spring 242 on the magnetic core 218 also remains unchanged, and the operating spring 242 and the magnetic core 218 can move integrally with each other linearly along with change in pressure. Thus the rate of change of the inductance of the coil 251 with respect to pressure change remains table, and the rate of change of the oscillation frequency generated by the oscillator circuit with respect to pressure change also remains stable. Defining the position of the operating spring 242 by means of adhesive bonding can also enable consistency of the initial position of the magnetic core 218 during each assembly of the pressure sensor 100, and it enables the magnetic core 218 to return to that initial position after completion of each measurement. Therefore, the initial oscillation frequency generated by the oscillator circuit in response to pressure change remains the same. Even when the pressure sensor 100 is subjected to external forces (e.g. during transportation), the operating spring 242 in the pressure sensor 100 does not tilt, the positional relativity between the operating spring 242, the magnetic core 218 and the coil 251 can still remain fixed, and therefore the accuracy of measurement results by the pressure sensor 100 is not affected. Of course, the bottom end 248 of the operating spring 242 and the magnetic core 218 are connected by means of adhesive bonding so that an adhesive layer 382 is formed between the bottom end 248 of the operating spring 242 and the magnetic core 218 (see Figure 3).

Thus the elastic rod 217 and the operating spring 242 collectively support the magnetic core 218 at its initial position. At the initial position of the magnetic core 218, the pressures in the upper chamber 215 and the lower chamber 216 are approximately equal and the diaphragm 210 is not deformed. During the use of the domestic electrical appliance, the pressure in the lower chamber 216 gradually increases along with the rise in level of the fluid to be measured, thereby causing the upward compression to which the diaphragm 210 is subjected to gradually increase and resulting in deformation of the diaphragm 210, upward motion of the thin film 213 that causes the magnetic core 218 to move upwards into the space defined by the coil 251, and a certain amount of inductance is generated by the coil 251. The upward motion of the magnetic core 218 causes the operating spring 242 to be compressed. As the liquid level drops, pressure in the lower chamber 216 gradually decreases and the operating spring 242 rebounds and pushes the magnetic core 218 to move downwards.

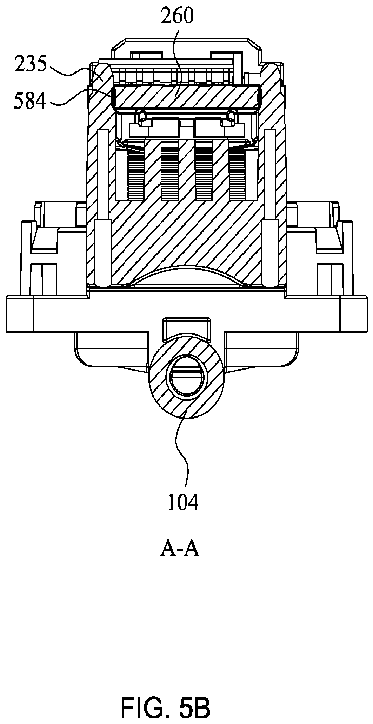

The signal output portion of the pressure sensor 100 comprises a printed circuit board 260 disposed between the upper housing part 201 and the cover 106, the printed circuit board 260 is approximately rectangular and whose longitudinal direction is the same as that of the pressure sensor 100. The rear portion of the printed circuit board 260 in the longitudinal direction is connected to the top of the cylindrical end 240, and the front portion of the printed circuit board 260 in the longitudinal direction is provided with a pair of U-shaped indentations 265 configured for the installation of the support rods 235 erected on the mounting platform 238 of the lower housing part 202. Two connector pins 262 are extended from the rear portion of the printed circuit board 260 (see Figure 5), and two ends 252 of the coil 251 are wound respectively on the connector pins 262 so that the coil 251 is connected to the circuit of the printed circuit board 260. The printed circuit board 260 is also provided with capacitors 568 and 569 (see Figure 5A). The capacitors 568, 569 and the coil 251 form an oscillator circuit (i.e. variable frequency oscillator). When the inductance of the coil 251 is affected by the upward and downward motion of the magnetic core 218, the oscillator circuit can generate signals with linearly changing frequency based on the changing inductance of the coil 251.

Thus, during the use of a domestic electrical appliance (such as a washing machine), as the level of fluid (or water level) to be measured changes (i.e. pressure of the fluid changes), the diaphragm 210 undergoes deformation and the magnetic core 218 can move upwards and downwards and get in and out of the cylindrical end 240 of the upper housing part 201. Based on the magnitude of insertion of the magnetic core 218 into the space defined by the coil 251 wound circumferentially around the cylindrical end 240, the coil 251 generates a certain amount of inductance. The oscillator circuit then generates signals with linearly changing frequency based on the changing inductance of the coil 251 and transmit the signals to the control system of the domestic electrical appliance (e.g. washing machine).

Figure 3 is a longitudinal sectional view of a pressure sensor of another embodiment of the present invention. This embodiment is about the same as the embodiment shown in Figure 2B, and the only difference is that the compensating elastic components in the pressure sensor shown in Figure 3 further include a compensating spring 318. As shown in Figure 3, the compensating elastic components are a combination of the elastic rod 217 and the compensating spring 318. The compensating spring 318 is sandwiched between the support 212 and the bottom of the lower housing part 202, and the protruding component 253 is sheathed in the compensating spring 318. By adjusting the depth of insertion of the adjustment bolt 243 into the cylindrical end 240, the tightness of the operating spring 242 and the compensating spring 318 at their initial states can be adjusted and the magnitudes of preset forces applied respectively by the operating spring 242 and the compensating spring 318 to the magnetic core 218 from both sides can thereby be adjusted. Addition of the compensating spring 318 can better compensate the gravitational forces of the magnetic core 218, the diaphragm 210 and other components, so that frequency signal output varies linearly when the pressure in the lower chamber 216 begins to change. Also, the adjustability of the compensating elastic components is increased.

As shown in Figure 3, the bottom end 248 of the operating spring 242 is connected to the magnetic core 218 by means of adhesive bonding (e.g. glue dispensing), so that an adhesive layer 382 is formed between the bottom end 248 of the operating spring 242 and the magnetic core 218. The adhesive layer 382 can also ensure that the relative position of the operating spring 242 between the adjustment bolt 243 and the magnetic core 218 remains unchanged so that the operating spring 242 does not move non-axially, thereby achieving the same effects as the adhesive layer 281. Providing the adhesive layer 281 and the adhesive layer 382 will do to increase flexibility in the assembly of internal components of the pressure sensor.

Figure 4 is a longitudinal sectional view of a pressure sensor of yet another embodiment of the present invention. This embodiment is about the same as the embodiment shown in Figure 2B, and the difference is that a bearing plate 458 is provided between the magnetic core 218 and the support 212. The magnetic core 218 is propped on the bearing plate 458 so that the magnetic core 218 is indirectly propped on the support 212, and the magnetic core 218 and the bearing plate 458 move upwards and downwards together along with deformation of the diaphragm 210.

Figurer 5A is an isometric schematic illustrating the pressure sensor shown in Figure 1 with its cover removed. Figure 5B is a sectional view taken along the line A-A shown in Figure 5A and illustrates the structure of the printed circuit board 260 of the pressure sensor 100.

As shown in Figure 5A and Figure 5B, the printed circuit board 260 is mounted at the top of the upper housing part 201, with two ends 252 of the coil 251 wound around two connector pins 262 so that the coil 251 is connected with the printed circuit board 260. The printed circuit board 260 is provided with a chip 261, e.g. a sensor chip. The printed circuit board 260 is provided with two capacitors 568 and 569, and the two capacitors 568, 569 and the coil 251 together form an oscillator circuit. It is worth noting that other than the chip 261 and the capacitors 568, 569 shown, the printed circuit board 260 may be installed with other chips, capacitors or other electronic components. In addition, the support rods 235 near the snap-lock mechanism 232 on the lower housing part 202 is configured to help support the front portion of the printed circuit board 260. The front portion of the printed circuit board 260 is configured for connection with the signal interface 120 to transmit output signals from the oscillator circuit on the printed circuit board 260 through the interface 120.

The bottom of the U-shaped indentations 265 on the printed circuit board 260 and the support rods 235 can be connected by means of adhesive bonding (e.g. glue dispensing), so that an adhesive layer 584 is formed between the bottom of the U-shaped indentations 265 and each of the support rods 235. This arrangement enables the printed circuit board 260 to be connected more firmly so that the printed circuit board 260 does not sway on the upper housing part 201 even when the pressure sensor 100 is subjected to external forces (e.g. during transportation).

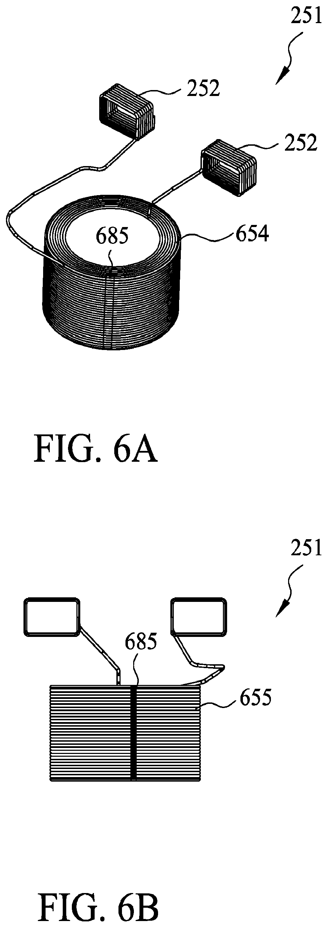

Figure 6A and Figure 6B illustrate the structure of a coil 251, wherein Figure 6A is an isometric schematic of the coil 251 while Figure 6B is a front view of the coil 251. As shown in Figure 6A and Figure 6B, the coil 251 can also include one or a plurality of coil layers 654 arranged radially around the cylindrical end 240 depending on application requirements. Each of the coil layers 654 comprises a plurality of wire turns 655 parallely arranged longitudinally along the cylindrical end 240, each of the plurality of wire turns 655 is wound circumferentially around the cylindrical end 240. At least two of the coil layers 654 adjacent to each other are bonded together by means of adhesive bonding (e.g. glue dispensing), so that an adhesive layer 685 is formed between the at least two of the coil layers 654 adjacent to each other to prevent the coil 251 from coming off. Or, the innermost of the coil layers 654 and cylindrical end 240 are bonded together by means of adhesive bonding, so that an adhesive layer 685 is formed between the innermost of the coil layers 654 and cylindrical end 240. In an exemplary embodiment, when the number of coil layers of the coil 251 is small, the arrangements can be such that an adhesive layer is formed between the outermost of the coil layers and its adjacent coil layer, and in which case it should be understood that adhesive can also be made to seep inwards from the outside to other adjacent coil layers to form adhesive layers 685. In an exemplary embodiment, the adhesive layer 685 is an elongated strip extending longitudinally from the top to the bottom of the cylindrical end. On the one hand, this arrangement of the adhesive layer 685 only requires a small amount of adhesive to have the coil layers 654 bonded together. On the other hand, the adhesive layer 685 will not affect sensing of the position of the magnetic core 218 by the coil 251 and will also not affect the inductance generated by the coil 251. Thus the structure of the coil 251 is stronger, and when the magnetic core 218 moves upwards and downwards the coil 251 can stably generate corresponding inductance.

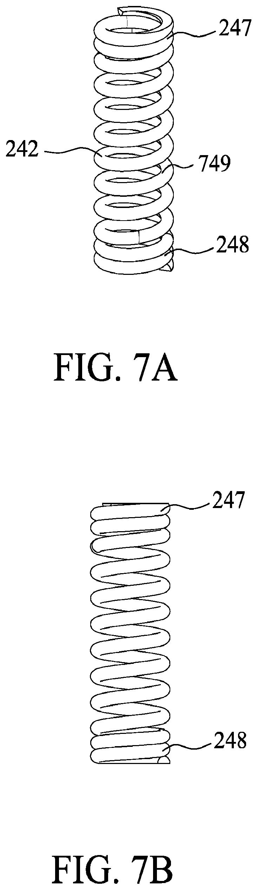

Figure 7A and Figure 7B illustrate the structure of an operating spring 242, where Figure 7A is an isometric schematic of the operating spring 242 while Figure 7B is a front view of the operating spring 242. As shown in Figure 7A and Figure 7B, the operating spring 242 is a cylindrical hermetical spring comprising a plurality of spring coils 749 with most adjacent spring coils 749 spaced at intervals to enable compression of the operating spring 242. No interval is left between the spring coils 749 at the ends of the operating spring 242. In an exemplary embodiment, the top end 247 of the operating spring 242 includes two parallely appressed spring coils 749, and the bottom end 248 of the operating spring 242 also includes two parallely appressed spring coils 749. The spring coils 749 at the top end 247 and the bottom end 248 of the operating spring 242 enable the operating spring 242 to be vertically erected, sandwiched between the adjustment bolt 243 and the magnetic core 218, flush with the lower surface of the adjustment bolt 243 and the upper surface of the magnetic core 218, and disposed coaxially with the operating spring 242, the magnetic core 218 and the coil 251. At this time, both ends of the operating spring 242 are not involved in deformation. In an exemplary embodiment, the top end 247 and the bottom end 248 of the operating spring 242 have closed ends, and the ends can be ground or not ground. It can be understood that a ground and closed end structure is capable of ensuring the operating spring 242 and the magnetic core 218 to be disposed coaxially with each other, but the cost is relatively higher. In some embodiments, the ends of the operating spring 242 are not ground so as to save cost. In the embodiments of the present invention, the ends of the operating spring are fixed by means of adhesive bonding without having to grind the ends of the operating spring, and the results achieved are good.

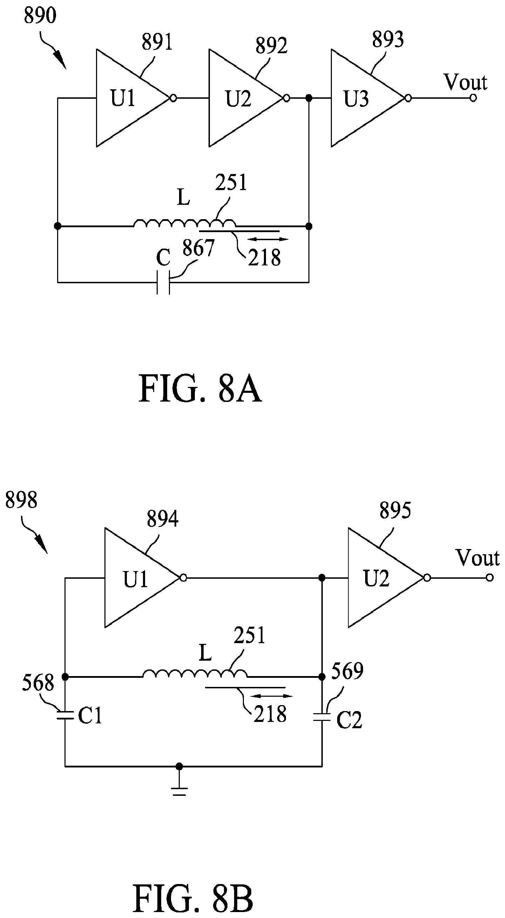

Figure 8A and Figure 8B are schematic circuit diagrams depicting oscillator circuits on the printed circuit board 260, and they illustrate the principles of electric circuits whereby linearly changing frequency of oscillation is generated along with motion of the magnetic core 218. In the two embodiments shown in Figure 8A and Figure 8B, the oscillator circuits are provided with different numbers of capacitors to meet different requirements. The coil 251 in the pressure sensor 100 is equivalent to an inductor L 251 shown in the figures. Difference in pressure results in change of position of the magnetic core 218 and thereby changes the inductance of the inductor L 251. The oscillator circuit 890 shown in Figure 8A comprises only one capacitor 867 connected in parallel with the coil 251, while the oscillator circuit 898 shown in Figure 8B comprises two capacitors 568 and 569 connected in series before being connected in parallel with the coil 251. The capacitors are resonant frequency selective capacitors for example.

As shown in Figure 8A, an inductor L 251 and a capacitor C 867 form a parallelly connected frequency selective network, and integrated circuits U1 891 and U2 892 as positive feedback amplifiers are connected in parallel with the parallelly connected frequency selective network formed by the inductor L 251 and the capacitor C 867. An integrated circuit U3 893 is configured for waveform shaping to output square wave signals, and the output linearly changing frequency of the circuit is:

$F = \frac{1}{2\pi\sqrt{LC}}$, where L represents inductance of the coil 251.

As shown in Figure 8B, an inductor L 251 and capacitors C1 568 and C2 569 form a standard capacitive three point oscillator circuit, and an integrated circuit U1 894 as an inverting amplifier is connected in parallel with the capacitive three point oscillator circuit. An integrated circuit U2 895 is configured for waveform shaping to output square wave signals, and the output linearly changing frequency of the circuit is:

$$F = \frac{1}{2\pi\sqrt{L\frac{C_1 C_2}{C_1 + C_2}}}$$

where L represents inductance of the coil 251.

Therefore, when the operating spring 242 is fixed by means of adhesive bonding, the magnetic core 218 can move upwards and downwards in response to pressure change and result in change in inductance of the coil 251 to obtain a linearly changing frequency. As an exemplary embodiment, a number of integrated circuits U1, U2, U3 may be disposed on a domestic electrical appliance using the pressure sensor of the present invention to form the circuits shown in Figure 8A and Figure 8B, but a number of integrated circuits U1, U2, U3 may also be disposed on the pressure sensor to form he circuits shown in Figure 8A and Figure 8B for direct output of result signals, and all the capacitors and other electronic components may also be disposed in a domestic electrical appliance using the pressure sensor of the present invention.

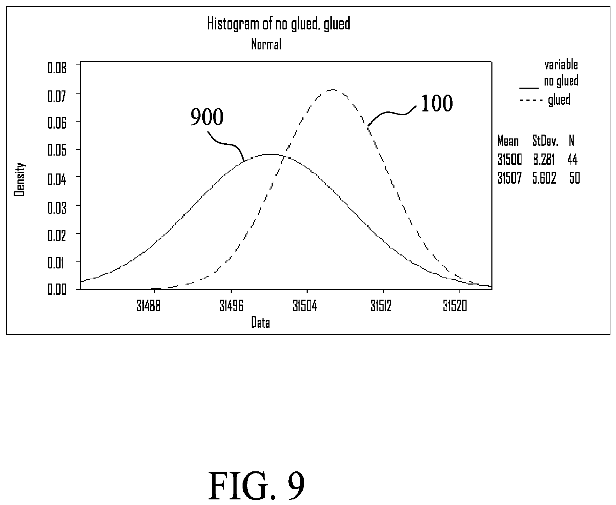

Figure 9 is a graph illustrating the statistical results in terms of capabilities of a prior art pressure sensor 900 and a pressure sensor 100 of the present invention during production processes. In the embodiment, the prior art pressure sensor 900 is not provided with adhesive layers 281 and 382, the operating spring 242 is directly sandwiched between the adjustment bolt 243 and the magnetic core 218. Alternatively, the prior art pressure sensor 900 is also not provided with adhesive layers 283, 584 and 685.

The pipe joints of the prior art pressure sensors 900 and the pipe joints 104 of various pressure sensors 100 of the present invention were connected respectively to a predetermined fluid for the fluid to be supplied to the pressure sensors at preset pressures. When the same pressure was supplied to the pressure sensors, the output frequencies (i.e. oscillation frequencies) of the circuits of the pressure sensors 900 and the pressure sensors 100 were measured, and a normal distribution graph as shown in Figure 9 was obtained. As shown in Figure 9, the pressure distribution measured by the pressure sensor 900 is shorter and broader which indicates that the individual differences between the pressure sensors 900 are relatively greater, while the pressure distribution measured by the pressure sensor 100 is taller and narrower which indicates that the individual differences between the pressure sensors are relatively smaller.

When fluid of different pressures is supplied to the pressure sensor 100 of the present invention, the output frequency (i.e. oscillation frequency) of the circuit and the pressure are linearly related which indicates that the output frequency of the pressure sensor 100 is stable and the measurement results are reliable.

In the pressure sensor 100 of the present invention, the operating spring 242 and the adjustment bolt 243 or the magnetic core 218 are fixed by means of adhesive bonding. This results in the relative position of the operating spring 242 between the adjustment bolt 243 and the magnetic core 218 being fixed and the operating spring 242 does not move non-axially, thereby making the magnitude of preset force applied by the operating spring 242 to the magnetic core 218 remain unchanged, the operating spring 242 and the magnetic core 218 linearly moving integrally with each other along with pressure change to obtain linearly changing frequency. Therefore, even when the pressure sensor 100 is subjected to external forces (e.g. during transportation), the operating spring 242 in the pressure sensor 100 does not tilt, the positional relativity between the operating spring 242, the magnetic core 218 and the coil 251 can still remain fixed, and therefore the accuracy of measurement results by the pressure sensor 100 is not affected. By improving the precision of the inductance sensing portion of the pressure sensor 100, the pressure and inductance can correspond more accurately. After the conversion of inductance to oscillation frequency, the pressure and oscillation frequency become linearly related.

The adhesive layers in the present invention is formed by dispensing glue or applying glue at the relevant locations for it to be toughened. The adhesive layers are formed by means of gluing or adhesive bonding. The adhesive used in the present invention has a certain degree of high-temperature resistance, weatherability and water resistivity. As an exemplary embodiment, the adhesive is an adhesive of the silicone rubber system or the epoxy system.

While the present invention is described with reference to the embodiments shown in the accompanying drawings, it should be understood that the pressure sensor of the present invention can have many variations without departing from the scope of the present invention as defined in the claims.

**Claims**

1. A pressure sensor comprising:

   a housing (105) comprising an upper housing part (201) and a lower housing part (202), the upper housing part (201) and the lower housing part (202) being configured such that a chamber is formed between them;
   a diaphragm (210) provided between the upper housing part (201) and the lower housing part (202), and dividing the chamber into an upper chamber (215) and a lower chamber (216);
   a magnetic core (218) linked to the diaphragm (210); and
   an operating spring (242) comprising a top end (247) and a bottom end (248), the top end (247) being supported against the upper housing part (201) and the bottom end (248) being supported against the magnetic core (218);
an adjustment bolt (243) is provided at the top of the upper housing part (201), wherein the top end (247) of the operating spring (242) is supported against the adjustment bolt (243), the adjustment bolt (243) is configured to adjust the magnitude of preset force applied by the operating spring (242) on the magnetic core (218);
**characterised in that**:

   the top end (247) and the bottom end (248) of the operating spring (242) is provided with an adhesive layer (281, 382); and wherein the adhesive layers (281, 382) are configured to have the operating spring (242) bonded to the magnetic core (218) and to the adjustment bolt (243).

2. The pressure sensor as defined in claim 1, **characterized in that**:

   the diaphragm (210) comprises a support (212) and a thin film (213) surrounding the support (212), the thin film (213) being extended from the edge of the support (212);
   wherein the magnetic core (218) is propped on the support (212).

3. The pressure sensor as defined in claim 2, **characterized in that**:
   a bearing plate (458) is provided between the magnetic core (218) and the support (212), the magnetic core (218) being propped on the bearing plate (458).

4. The pressure sensor as defined in claim 1, further comprising:
   compensating elastic components (217, 318) sandwiched between the lower housing part (202) and the diaphragm (210).

5. The pressure sensor as defined in claim 4, **characterized in that**:
   the compensating elastic components (217, 318) include an elastic rod (217) provided below the support (212) of the diaphragm (210), the elastic rod (217) being extended from the support (212) and in contact with the bottom of the lower housing part (202), the elastic rod (217) being capable of axial motion along the magnetic core (218).

6. The pressure sensor as defined in claim 1, **characterized in that**:
   the adhesive layers (281, 382) include a first adhesive layer (281) provided between the top end (247) of the operating spring (242) and the adjustment bolt (243), the first adhesive layer (281) being configured to have the top end (247) of the operating spring (242) bonded to the adjustment bolt (243).

7.  The pressure sensor as defined in claim 6, **characterized in that**:
    the adhesive layers (281, 382) include a second adhesive layer (382) provided between the bottom end (248) of the operating spring (242) and the magnetic core (218), the second adhesive layer (382) being configured to have the bottom end (248) of the operating spring (242) bonded to the magnetic core (218).

8.  The pressure sensor as defined in claim 1 or 6, **characterized in that**:
    the operating spring (242) and the magnetic core (218) are provided coaxially with each other.

9.  The pressure sensor as defined in claim 8, **characterized in that**:
    the upper housing part (201) is connected to the upper portion of the lower housing part (202), wherein a third adhesive layer (283) is provided between the upper housing part (201) and the lower housing part (202).

10. The pressure sensor as defined in claim 8, further comprising:

    capacitors (568, 569); and
    a coil (251) mounted to the upper housing part (201), the coil (251) working in coordination with the magnetic core (218) to form a variable inductance sensor;
    wherein the capacitors (568, 569) and the variable inductance sensor form a variable frequency oscillator.

11. The pressure sensor as defined in claim 10, further comprising:

    at least one printed circuit board (260) whose rear portion is connected to the upper housing part (201), the end (252) of the coil (251) is connected to the at least one printed circuit board (260);
    the lower housing part (202) is provided with support rods (235) configured to support the front portion of the at least one printed circuit board (260);
    wherein a fourth adhesive layer (584) is provided between the support rod (235) and the at least one printed circuit board (260).

12. The pressure sensor as defined in claim 10, **characterized in that**:

    the coil (251) comprises at least one coil layer (654);
the upper housing part (201) comprises a cylindrical end (240), each of the coil layers (654) comprises a plurality of wire turns (655), each of the plurality of wire turns (655) is wound circumferentially around the cylindrical end (240);
wherein a fifth adhesive layer (685) extending axially along the cylindrical end (240) is provided between at least two of the coil layers (654) adjacent to each other, or between at least one of the coil layers (654) and the cylindrical end (240).

13. The pressure sensor as defined in claim 12, **characterized in that**:
    the fifth adhesive layer (685) is provided between the outermost of the coil layers (654) and the coil layer (654) on the inner side thereof, and configured to have the outermost of the coil layers (654) bonded to the coil layer (654) on the inner side thereof.

14. The pressure sensor as defined in claim 1, **characterized in that**:

    the operating spring (242) comprises a plurality of helical coil turns (749), each of the top end (247) and the bottom end (248) of the operating spring (242) comprises at least two closely appressed helical coil turns (749), the top end (247) and/or the bottom end (248) of the operating spring (242) have closed ends
    and optionally wherein;
    the top end (247) and/or the bottom end (248) of the operating spring (242) have closed and ground ends.

**Patentansprüche**

1.  Drucksensor, aufweisend:

    ein Gehäuse (105), aufweisend ein oberes Gehäuseteil (201) und ein unteres Gehäuseteil (202), wobei das obere Gehäuseteil (201) und das untere Gehäuseteil (202) so eingerichtet sind, dass eine Kammer zwischen ihnen gebildet wird;
    eine Membran (210), die zwischen dem oberen Gehäuseteil (201) und dem unteren Gehäuseteil (202) vorgesehen ist und die Kammer in eine obere Kammer (215) und eine untere Kammer (216) unterteilt;
    einen Magnetkern (218), der mit der Membran (210) verbunden ist; und
    eine Betätigungsfeder (242), aufweisend ein oberes Ende (247) und ein unteres Ende (248), wobei das obere Ende (247) gegen das obere Gehäuseteil (201) abgestützt ist und das untere Ende (248) gegen den Magnetkern (218) abgestützt ist;

ein Einstellbolzen (243) ist an der Oberseite des oberen Gehäuseteils (201) vorgesehen, wobei das obere Ende (247) der Betätigungsfeder (242) gegen den Einstellbolzen (243) abgestützt ist, wobei der Einstellbolzen (243) so eingerichtet ist, dass er das Maß der voreingestellten Kraft, die von der Betätigungsfeder (242) auf den Magnetkern (218) ausgeübt wird, anpasst; **dadurch gekennzeichnet, dass**:

das obere Ende (247) und das untere Ende (248) der Betätigungsfeder (242) mit einer Klebeschicht (281, 382) versehen ist; und

wobei die Klebeschichten (281, 382) so eingerichtet sind, dass die Betätigungsfeder (242) mit dem Magnetkern (218) und dem Einstellbolzen (243) verklebt wird.

2. Drucksensor nach Anspruch 1, **dadurch gekennzeichnet, dass**:

die Membran (210) einen Träger (212) und eine Dünnschicht (213) aufweist, die den Träger (212) umgibt, wobei sich die Dünnschicht (213) von der Kante des Trägers (212) erstreckt; wobei der Magnetkern (218) auf dem Träger (212) abgestützt ist.

3. Drucksensor nach Anspruch 2, **dadurch gekennzeichnet, dass**:
zwischen dem Magnetkern (218) und dem Träger (212) eine Auflageplatte (458) vorgesehen ist, wobei der Magnetkern (218) auf der Auflageplatte (458) abgestützt ist.

4. Drucksensor nach Anspruch 1, ferner aufweisend:
ausgleichende elastische Komponenten (217, 318), die zwischen dem unteren Gehäuseteil (202) und der Membran (210) eingebettet sind.

5. Drucksensor nach Anspruch 4, **dadurch gekennzeichnet, dass**:
die ausgleichenden elastischen Komponenten (217, 318) eine elastische Stange (217) umfassen, die unterhalb des Trägers (212) der Membran (210) vorgesehen ist, wobei sich die elastische Stange (217) von dem Träger (212) erstreckt und in Kontakt mit dem Boden des unteren Gehäuseteils (202) steht, wobei die elastische Stange (217) axial entlang des Magnetkerns (218) bewegbar ist.

6. Drucksensor nach Anspruch 1, **dadurch gekennzeichnet, dass**:
die Klebeschichten (281, 382) eine erste Klebeschicht (281) umfassen, die zwischen dem oberen Ende (247) der Betätigungsfeder (242) und dem Einstellbolzen (243) vorgesehen ist, wobei die erste Klebeschicht (281) so eingerichtet ist, dass das obere Ende (247) der Betätigungsfeder (242) mit dem Einstellbolzen (243) verklebt wird.

7. Drucksensor nach Anspruch 6, **dadurch gekennzeichnet, dass**:
die Klebeschichten (281, 382) eine zweite Klebeschicht (382) umfassen, die zwischen dem unteren Ende (248) der Betätigungsfeder (242) und dem Magnetkern (218) vorgesehen ist, wobei die zweite Klebeschicht (382) so eingerichtet ist, dass das untere Ende (248) der Betätigungsfeder (242) mit dem Magnetkern (218) verklebt wird.

8. Drucksensor nach Anspruch 1 oder 6, **dadurch gekennzeichnet, dass**:
die Betätigungsfeder (242) und der Magnetkern (218) koaxial zueinander vorgesehen sind.

9. Drucksensor nach Anspruch 8, **dadurch gekennzeichnet, dass**:
das obere Gehäuseteil (201) mit dem oberen Abschnitt des unteren Gehäuseteils (202) verbunden ist, wobei zwischen dem oberen Gehäuseteil (201) und dem unteren Gehäuseteil (202) eine dritte Klebeschicht (283) vorgesehen ist.

10. Drucksensor nach Anspruch 8, ferner aufweisend:

Kondensatoren (568, 569); und eine Spule (251), die an dem oberen Gehäuseteil (201) angebracht ist, wobei die Spule (251) in Koordination mit dem Magnetkern (218) arbeitet, um einen Sensor mit variabler Induktivität zu bilden; wobei die Kondensatoren (568, 569) und der Sensor mit variabler Induktivität einen Oszillator mit variabler Frequenz bilden.

11. Drucksensor nach Anspruch 10, ferner aufweisend:

zumindest eine Leiterplatte (260), deren hinterer Abschnitt mit dem oberen Gehäuseteil (201) verbunden ist, wobei das Ende (252) der Spule (251) mit der zumindest einen Leiterplatte (260) verbunden ist; das untere Gehäuseteil (202) mit Stützstangen (235) versehen ist, die so eingerichtet sind, dass sie den vorderen Abschnitt der zumindest einen Leiterplatte (260) stützen; wobei eine vierte Klebeschicht (584) zwischen der Stützstange (235) und der zumindest einen Leiterplatte (260) vorgesehen ist.

12. Drucksensor nach Anspruch 10, **dadurch gekennzeichnet, dass**:

die Spule (251) zumindest eine Spulenschicht (654) aufweist;

das obere Gehäuseteil (201) ein zylindrisches Ende (240) aufweist, jede der Spulenschichten (654) eine Mehrzahl von Drahtwindungen (655) aufweist, wobei jede der Mehrzahl von Drahtwindungen (655) in Umfangsrichtung um das zylindrische Ende (240) gewickelt ist;

wobei eine fünfte Klebeschicht (685), die sich axial entlang des zylindrischen Endes (240) erstreckt, zwischen zumindest zwei der Spulenschichten (654) nebeneinander oder zwischen zumindest einer der Spulenschichten (654) und dem zylindrischen Ende (240) vorgesehen ist.

13. Drucksensor nach Anspruch 12, **dadurch gekennzeichnet, dass**:

die fünfte Klebeschicht (685) zwischen der äußersten der Spulenschichten (654) und der Spulenschicht (654) auf deren Innenseite vorgesehen ist und so eingerichtet ist, dass die äußerste der Spulenschichten (654) mit der Spulenschicht (654) auf deren Innenseite verklebt wird.

14. Drucksensor nach Anspruch 1, **dadurch gekennzeichnet, dass**:

die Betätigungsfeder (242) eine Mehrzahl von spiralförmigen Spulenwindungen (749) aufweist, wobei sowohl das obere Ende (247) als auch das untere Ende (248) der Betätigungsfeder (242) zumindest zwei eng zusammengedrückte spiralförmige Spulenwindungen (749) aufweist, wobei das obere Ende (247) und/oder das untere Ende (248) der Betätigungsfeder (242) geschlossene Enden aufweist und optional, wobei;

das obere Ende (247) und/oder das untere Ende (248) der Betätigungsfeder (242) geschlossene und geschliffene Enden aufweist.

**Revendications**

1. Capteur de pression comprenant :

un boîtier (105) comprenant une partie de boîtier supérieure (201) et une partie de boîtier inférieure (202), la partie de boîtier supérieure (201) et la partie de boîtier inférieure (202) étant configurées de telle sorte qu'une chambre est formée entre elles ;

un diaphragme (210) prévu entre la partie de boîtier supérieure (201) et la partie de boîtier inférieure (202), et divisant la chambre en une chambre supérieure (215) et une chambre inférieure (216) ;

un noyau magnétique (218) lié au diaphragme (210) ; et

un ressort de fonctionnement (242) comprenant une extrémité supérieure (247) et une extrémité inférieure (248), l'extrémité supérieure (247) étant appuyée contre la partie de boîtier supérieure (201) et l'extrémité inférieure (248) étant appuyée contre le noyau magnétique (218) ;

un boulon de réglage (243) est prévu au sommet de la partie de boîtier supérieure (201), dans lequel l'extrémité supérieure (247) du ressort de fonctionnement (242) est appuyée contre le boulon de réglage (243), le boulon de réglage (243) étant configuré pour régler l'amplitude de la force préétablie appliquée par le ressort de fonctionnement (242) sur le noyau magnétique (218) ;

**caractérisé en ce que** :

l'extrémité supérieure (247) et l'extrémité inférieure (248) du ressort de fonctionnement (242) sont pourvues d'une couche adhésive (281, 382) ;
et
dans lequel les couches adhésives (281, 382) sont configurées pour que le ressort de fonctionnement (242) soit collé au noyau magnétique (218) et au boulon de réglage (243).

2. Capteur de pression selon la revendication 1, **caractérisé en ce que** :

le diaphragme (210) comprend un support (212) et un film mince (213) entourant le support (212), le film mince (213) étant étendu à partir du bord du support (212) ;
dans lequel le noyau magnétique (218) est appuyé sur le support (212).

3. Capteur de pression selon la revendication 2, **caractérisé en ce que** :

une plaque de support (458) est prévue entre le noyau magnétique (218) et le support (212), le noyau magnétique (218) étant appuyé sur la plaque de support (458).

4. Capteur de pression selon la revendication 1, comprenant en outre :

des composants élastiques de compensation (217, 318) pris en sandwich entre la partie de boîtier inférieure (202) et le diaphragme (210).

5. Capteur de pression selon la revendication 4, **caractérisé en ce que** :

les composants élastiques de compensation (217, 318) comprennent une tige élastique (217) prévue sous le support (212) du diaphragme (210), la tige élastique (217) étant étendue à partir du support (212) et en contact avec le fond de la partie de boîtier inférieure (202), la tige élastique (217) étant capable d'un mouvement axial le long du noyau magnétique (218).

6. Capteur de pression selon la revendication 1, **caractérisé en ce que** :
les couches adhésives (281, 382) comprennent une première couche adhésive (281) prévue entre l'extrémité supérieure (247) du ressort de fonctionnement (242) et le boulon de réglage (243), la première couche adhésive (281) étant configurée pour que l'extrémité supérieure (247) du ressort de fonctionnement (242) soit collée au boulon de réglage (243).

7. Capteur de pression selon la revendication 6, **caractérisé en ce que** :
les couches adhésives (281, 382) comprennent une seconde couche adhésive (382) prévue entre l'extrémité inférieure (248) du ressort de fonctionnement (242) et le noyau magnétique (218), la seconde couche adhésive (382) étant configurée pour que l'extrémité inférieure (248) du ressort de fonctionnement (242) soit collée au noyau magnétique (218).

8. Capteur de pression selon la revendication 1 ou 6, **caractérisé en ce que** :
le ressort de fonctionnement (242) et le noyau magnétique (218) sont disposés coaxialement l'un par rapport à l'autre.

9. Capteur de pression selon la revendication 8, **caractérisé en ce que** :
la partie de boîtier supérieure (201) est connectée à la partie supérieure de la partie de boîtier inférieure (202), dans lequel une troisième couche adhésive (283) est prévue entre la partie de boîtier supérieure (201) et la partie de boîtier inférieure (202).

10. Capteur de pression selon la revendication 8, comprenant en outre :

des condensateurs (568, 569) ; et
une bobine (251) montée sur la partie de boîtier supérieure (201), la bobine (251) fonctionnant en coordination avec le noyau magnétique (218) pour former un capteur à inductance variable ;
dans lequel les condensateurs (568, 569) et le capteur à inductance variable forment un oscillateur à fréquence variable.

11. Capteur de pression selon la revendication 10, comprenant en outre :

au moins une carte de circuit imprimé (260) dont la partie arrière est connectée à la partie de boîtier supérieure (201), l'extrémité (252) de la bobine (251) étant connectée à au moins une carte de circuit imprimé (260) ;
la partie de boîtier inférieure (202) est munie de tiges de support (235) configurées pour supporter la partie avant d'au moins une carte de circuit imprimé (260) ;
dans lequel une quatrième couche adhésive (584) est prévue entre la tige de support (235) et au moins une carte de circuit imprimé (260).

12. Capteur de pression selon la revendication 10, **caractérisé en ce que** :

la bobine (251) comprend au moins une couche de bobine (654) ;
la partie de boîtier supérieure (201) comprend une extrémité cylindrique (240), chacune des couches de bobine (654) comprend une pluralité de spires de fil (655), chacune de la pluralité de spires de fil (655) est enroulée circonférentiellement autour de l'extrémité cylindrique (240) ;
dans lequel une cinquième couche adhésive (685) s'étendant axialement le long de l'extrémité cylindrique (240) est prévue entre au moins deux des couches de bobine (654) adjacentes l'une à l'autre, ou entre au moins une des couches de bobine (654) et l'extrémité cylindrique (240).

13. Capteur de pression selon la revendication 12, **caractérisé en ce que** :
la cinquième couche adhésive (685) est disposée entre la couche la plus à l'extérieur des couches de bobine (654) et la couche de bobine (654) du côté intérieur de celle-ci, et configurée pour que la couche la plus à l'extérieur des couches de bobine (654) soit collée à la couche de bobine (654) du côté intérieur de celle-ci.

14. Capteur de pression selon la revendication 1, **caractérisé en ce que** :

le ressort de fonctionnement (242) comprend une pluralité de spires hélicoïdales (749), chacune de l'extrémité supérieure (247) et de l'extrémité inférieure (248) du ressort de fonctionnement (242) comprend au moins deux spires hélicoïdales (749) étroitement appliquées, l'extrémité supérieure (247) et/ou l'extrémité inférieure (248) du ressort de fonctionnement (242) ayant des extrémités fermées
et, éventuellement, dans lequel ;
l'extrémité supérieure (247) et/ou l'extrémité inférieure (248) du ressort de fonctionnement (242) ont des extrémités fermées et rectifiées.

FIG. 1

FIG. 2A

FIG. 2B

FIG. 3

FIG. 4

FIG. 5A

A-A

FIG. 5B

FIG. 6A

FIG. 6B

FIG. 7A

FIG. 7B

890

891

892

893

U1

U2

U3

Vout

L 251

C 867

218

# FIG. 8A

898

894

895

U1

U2

Vout

L 251

568

C1

569

C2

218

# FIG. 8B

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9267859 B2
- EP 3336502 A1
- KR 20180079196 A
- WO 2015153194 A1